# EUROPEAN PATENT APPLICATION

(11) **EP 4 431 564 A1**
(43) Date of publication of application: **18.09.2024**
(21) Application number: 21927079.0
(22) Date of filing: 12.11.2021
(51) Int. Cl.: C08L 33/26, C08L 33/06, C08L 33/14, G02B 1/04, G02B 1/18, G02C 7/04

(54) **CONTACT LENS AND MANUFACTURING METHOD THEREFOR**

(71) Applicant: Pegavision Corporation, Taoyuan City 333 (TW)
(72) Inventor: CHENG, Hsiu-Yi, Guishan Dist, Taoyuan, Taiwan (CN); LEE, Kuen-Tsan, Guishan Dist, Taoyuan, Taiwan (CN)
(74) Representative: Winter, Brandl - Partnerschaft mbB
(86) International application number: PCT/CN2021/130237
(87) International publication number: WO 2023/082166

(57) **Abstract**

A contact lens and a manufacturing method thereof are provided. The contact lens includes a lens and a hydrophilic polymer layer. The hydrophilic polymer layer and the lens are entangled with each other. The hydrophilic polymer layer and the lens form an interpenetrating polymer network or a semi-interpenetrating polymer network. The hydrophilic polymer layer is formed by polymerizing an initiator adsorbed on the lens with at least one hydrophilic vinyl monomer. The contact lens has excellent hydrophilicity. Since the manufacturing process of the contact lens is simple, the manufacturing efficiency can be improved, and the manufacturing cost can be reduced. Moreover, the manufacturing method can be applied to lenses made of various materials and used for their surface modification, so it is widely applicable.

## Description

### BACKGROUND

### Field of Invention

The present disclosure relates to a contact lens and a manufacturing method thereof.

### Description of Related Art

Since silicone hydrogel contact lenses have high oxygen permeability, oxygen is allowed to reach the cornea through the lenses, which can relieve dry eyes and red eyes. Silicone hydrogel material has become the mainstream of the contact lenses market in recent years; however, silicone hydrogel contact lenses have some disadvantages. For example, the hydrophobicity of the organic silicon based material may cause discomfort and dryness due to abrasion between lenses and the eye, and the surface of the lenses is prone to protein adsorption and deposition.

To retain the advantages of the high oxygen permeability of the silicone hydrogel contact lenses, surface modification techniques of lenses can be used to enhance wearing comfort. However, traditional surface modification techniques have some drawbacks. For example, contact lens surface modification can be performed using plasma treatment. However, the contact lenses must usually be dried prior to the plasma treatment. A plasma treatment equipment is expensive, and therefore the plasma treatment can increase the cost of manufacturing the contact lenses. In addition, surface modification can be performed by grafting hydrophilic polymeric substances onto the contact lenses; however, this method can only be applied to some types of hydrogel contact lens materials that must have specific functional groups. Furthermore, contact lenses can be made by adding wetting agents to lens formulations for manufacturing silicone hydrogel contact lenses. However, the wetting agents may be incompatible with the polysiloxane component of the lens formulations and cause haze in the lenses, which adversely affects the lens properties. Given the above, a new contact lens and a new manufacturing method of contact lens are needed to overcome the above problems.

### SUMMARY

The present disclosure provides a contact lens including a lens and a hydrophilic polymer layer. The hydrophilic polymer layer and the lens are entangled with each other. The hydrophilic polymer layer and the lens form an interpenetrating polymer network (IPN) or a semi-interpenetrating polymer network (semi-IPN). The hydrophilic polymer layer is formed by polymerizing an initiator adsorbed on the lens with at least one hydrophilic vinyl monomer.

In some embodiments, the initiator includes potassium persulfate (KPS), azobisisobutyronitrile (AIBN), 2,2'-azobis(2-methylpropionamidine) dihydrochloride (AAPH), 2,2'-azobis(2-methylbutyronitrile) (AMBN), 2,2'-azobis-(2,4-dimethylvaleronitrile) (ADVN), 4,4'-azobis(4-cyanovaleric acid) (ACVA), 2-methylpropane-2-peroxol (TBHP), 2,2'-azobis[2-(2-imidazolin-2-yl)propane] dihydrochloride, cumene hydroperoxide, di-tert-butyl peroxide (DTBP), benzoyl peroxide, or combinations thereof.

In some embodiments, the at least one hydrophilic vinyl monomer includes acrylic acid, methacrylic acid, acrylamide, methacrylamide, N,N-dimethylacrylamide (DMA), N,N-dimethylmethacrylamide (DMMA), N,N-dimethylmethacrylamide, N-(hydroxyethyl)acrylamide (NHEMAA), N-[tris(hydroxymethyl)methyl]acrylamide, 2,3-dihydroxypropyl methacrylate (glycerol monomethacrylate, GMMA), hydroxyethyl methacrylate (HEMA), 2-acrylamido-2-methyl-1-propane sulfonic acid, N-vinyl-2-pyrrolidone, methyl methacrylate (MAA), ethylene glycol diacrylate, hydroxypropyl acrylate, 2-hydroxypropyl methacrylate, trimethylammonium 2-hydroxy propyl methacrylate hydrochloride, aminopropyl methacrylate hydrochloride, dimethylaminoethyl methacrylate, glycerol methacrylate, N-vinyl-2-pyrrolidone (NVP), allyl alcohol, vinylpyridine, N-vinylformamide, N-vinylacetamide, N-vinyl isopropamide, N-vinyl-N-methylacetamide, allyl alcohol, N-vinylcaprolactam, or combinations thereof.

In some embodiments, the at least one hydrophilic vinyl monomer includes a first hydrophilic vinyl monomer and a second hydrophilic vinyl monomer that are different, and a weight ratio of the first hydrophilic vinyl monomer to the second hydrophilic vinyl monomer is 20:1 to 1:1.

In some embodiments, the at least one hydrophilic vinyl monomer includes a first hydrophilic vinyl monomer, a second hydrophilic vinyl monomer, and a third hydrophilic vinyl monomer that are different.

In some embodiments, the lens includes a hydrogel lens or a silicone hydrogel lens.

The present disclosure provides a method of manufacturing a contact lens including the following operations. A lens is made to adsorb an initiator. The initiator adsorbed on the lens is polymerized with at least one hydrophilic vinyl monomer to form a hydrophilic polymer layer entangled with the lens, in which the hydrophilic polymer layer and the lens form an interpenetrating polymer network or a semi-interpenetrating polymer network.

In some embodiments, making the lens adsorb the initiator includes soaking the lens in an initiator solution including the initiator.

In some embodiments, a concentration of the initiator in the initiator solution is 0.1 wt% to 10 wt%.

In some embodiments, polymerizing the initiator adsorbed on the lens with the at least one hydrophilic vinyl monomer includes the following operations. The lens adsorbing the initiator is soaked in a monomer solution including the at least one hydrophilic vinyl monomer. The lens and the monomer solution are heated.

In some embodiments, the lens and the monomer solution are heated at a temperature of 60 °C to 130 °C.

In some embodiments, the lens and the monomer solution are heated for a period of 0.5 minutes to 140 minutes.

In some embodiments, the lens and the monomer solution is heated for a period of 30 minutes to 120 minutes.

In some embodiments, the initiator includes potassium persulfate (KPS), azobisisobutyronitrile (AIBN), 2,2'-azobis(2-methylpropionamidine) dihydrochloride (AAPH), 2,2'-azobis(2-methylbutyronitrile) (AMBN), 2,2'-azobis-(2,4-dimethylvaleronitrile) (ADVN), 4,4'-azobis(4-cyanovaleric acid) (ACVA), 2-methylpropane-2-peroxol (TBHP), 2,2'-azobis[2-(2-imidazolin-2-yl)propane] dihydrochloride, cumene hydroperoxide, di-tert-butyl peroxide (DTBP), benzoyl peroxide, or combinations thereof.

In some embodiments, the at least one hydrophilic vinyl monomer includes acrylic acid, methacrylic acid, acrylamide, methacrylamide, N,N-dimethylacrylamide (DMA), N,N-dimethylmethacrylamide (DMMA), N,N-dimethylmethacrylamide, N-(hydroxyethyl)acrylamide (NHEMAA), N-[tris(hydroxymethyl)methyl]acrylamide, 2,3-dihydroxypropyl methacrylate (GMMA), hydroxyethyl methacrylate (HEMA), 2-acrylamido-2-methyl-1-propane sulfonic acid, N-vinyl-2-pyrrolidone, methyl methacrylate (MAA), ethylene glycol diacrylate, hydroxypropyl acrylate, 2-hydroxypropyl methacrylate, trimethylammonium 2-hydroxy propylmethacrylate hydrochloride, aminopropyl methacrylate hydrochloride, dimethylaminoethyl methacrylate, glycerol methacrylate, N-vinyl-2-pyrrolidone (NVP), allyl alcohol, vinylpyridine, N-vinylformamide, N-vinylacetamide, N-vinyl isopropamide, N-vinyl-N-methylacetamide, allyl alcohol, N-vinylcaprolactam, or combinations thereof.

These and other features, aspects, and advantages of the present disclosure will become better understood with reference to the following description and appended claims.

It is to be understood that both the foregoing general description and the following detailed description are by examples, and are intended to provide further explanation of the invention as claimed.

### DETAILED DESCRIPTION

In the present specification, a range represented by "a numerical value to another numerical value" is a schematic representation for avoiding listing all of the numerical values in the range in the specification. Therefore, the recitation of a specific numerical range covers any numerical value in the numerical range and a smaller numerical range defined by any numerical value in the numerical range, as is the case with the any numerical value and the smaller numerical range stated explicitly in the specification.

The term "about," "approximately," "essentially," or "substantially" as used herein is inclusive of the stated value and means within an acceptable range of deviation for the particular value as determined by persons of ordinary skill in the art, considering the measurement in question and the error associated with measurement of the particular quantity (i.e., the limitations of the measurement system). For example, "about" may mean within one or more standard deviations, or within, for example, ±30%, ±20%, ±15%, ±10%, ±5% of the stated value. Moreover, a relatively acceptable range of deviation or standard deviation may be chosen for the term "about," "approximately," "essentially" or "substantially" as used herein based on measuring properties, coating properties, or other properties, instead of applying one standard deviation across all the properties.

Although a series of operations or steps are used below to describe the method disclosed herein, an order of these operations or steps should not be construed as a limitation to the present disclosure. For example, some operations or steps may be performed in a different order and/or other steps may be performed at the same time. In addition, all shown operations, steps and/or features are not required to be executed to implement an embodiment of the present disclosure. In addition, each operation or step described herein may include a plurality of sub-steps or actions.

The present disclosure provides a contact lens that includes a lens and a hydrophilic polymer layer. The hydrophilic polymer layer and the lens are entangled with each other. The hydrophilic polymer layer and the lens form an interpenetrating polymer network or a semi-interpenetrating polymer network. The hydrophilic polymer layer is formed by polymerizing an initiator adsorbed on the lens with at least one hydrophilic vinyl monomer. In some embodiments, the hydrophilic polymer layer is a hydrophilic polymer network.

In more detail, since a contact lens has a network structure, an initiator can be adsorbed on the surface of the contact lens and also can enter the interior of the network structure. Thus, when the initiator generates free radicals, the free radicals are polymerized with the hydrophilic vinyl monomers, thereby forming an interlaced structure of a network of a hydrophilic polymer layer and the network of the contact lens to modify the surface of the lens. In the contact lens of the present disclosure, the hydrophilic polymer layer is not attached on the lens by forming covalent bonds between the hydrophilic polymer layer and the lens. In some embodiments, no covalent bond is formed between the hydrophilic polymer layer and the lens. The surface properties of the lens can be modified by the hydrophilic polymer layer, and therefore the lens has good hydrophilicity. In some embodiments, the contact lens has a hysteresis angle of 4 degrees to 63 degrees. For example, the hysteresis angle is 4, 5, 6, 7, 8, 9, 10, 11, 12, 13, 14, 15, 16, 17, 18, 19, 20, 30, 40, 50, 60, or 63 degrees.

In some embodiments, the initiator includes potassium persulfate (KPS), azobisisobutyronitrile (AIBN), 2,2'-azobis(2-methylpropionamidine) dihydrochloride (AAPH), 2,2'-azobis(2-methylbutyronitrile) (AMBN), 2,2'-azobis-(2,4-dimethylvaleronitrile) (ADVN), 4,4'-azobis(4-cyanovaleric acid) (ACVA), 2-methylpropane-2-peroxol (TBHP), 2,2'-azobis[2-(2-imidazolin-2-yl)propane] dihydrochloride, cumene hydroperoxide, di-tert-butyl peroxide (DTBP), benzoyl peroxide, or combinations thereof.

In some embodiments, the at least one hydrophilic vinyl monomer includes acrylic acid, methacrylic acid, acrylamide, methacrylamide, N,N-dimethylacrylamide (DMA), N,N-dimethylmethacrylamide (DMMA), N,N-dimethylmethacrylamide, N-(hydroxyethyl)acrylamide (NHEMAA), N-[tris(hydroxymethyl)methyl]acrylamide, 2,3-dihydroxypropyl methacrylate (GMMA), hydroxyethyl methacrylate (HEMA), 2-acrylamido-2-methyl-1-propane sulfonic acid, N-vinyl-2-pyrrolidone, methyl methacrylate (MAA), ethylene glycol diacrylate, hydroxypropyl acrylate, 2-hydroxypropyl methacrylate, trimethylammonium 2-hydroxy propyl methacrylate hydrochloride, aminopropyl methacrylate hydrochloride, dimethylaminoethyl methacrylate, glycerol methacrylate, N-vinyl-2-pyrrolidone (NVP), allyl alcohol, vinylpyridine, N-vinylformamide, N-vinylacetamide, N-vinyl isopropamide, N-vinyl-N-methylacetamide, allyl alcohol, N-vinylcaprolactam, or combinations thereof.

In some embodiments, the present disclosure can use two different hydrophilic vinyl monomers to react with the initiator at the same time. The use of the two hydrophilic vinyl monomers reacted with the initiator provides better hydrophilicity and wettability of the contact lens than the use of a single hydrophilic vinyl monomer reacted with an initiator. The types and weight ratios of the hydrophilic vinyl monomers can be adjusted according to the lens design requirements. In some embodiments, the at least one hydrophilic vinyl monomer includes a first hydrophilic vinyl monomer and a second hydrophilic vinyl monomer that are different. In some embodiments, the first hydrophilic vinyl monomer has an amino group, and the second hydrophilic vinyl monomer has a hydroxyl group. For example, the first hydrophilic vinyl monomer is N,N-dimethylacrylamide (DMA), and the second hydrophilic vinyl monomer is 2,3-dihydroxypropyl methacrylate (GMMA). For example, a weight ratio of the first hydrophilic vinyl monomer to the second hydrophilic vinyl monomer is 20:1 to 1:1. For example, the weight ratio is 20:1, 18:1, 16:1, 14:1, 12:1, 10:1, 8:1, 6:1, 4:1, 2:1, or 1:1. When the weight ratio falls within the above ranges, the contact lens can have good hydrophilicity and wettability.

In some embodiments, the present disclosure can use three different hydrophilic vinyl monomers to react with the initiator at the same time. The use of the three hydrophilic vinyl monomers reacted with the initiator provides better hydrophilicity and wettability of the contact lens than the use of a single hydrophilic vinyl monomer reacted with an initiator. The types and weight ratios of the hydrophilic vinyl monomers can be adjusted according to the lens design requirements. In some embodiments, the at least one hydrophilic vinyl monomer includes a first hydrophilic vinyl monomer, a second hydrophilic vinyl monomer, and a third hydrophilic vinyl monomer that are different. In some embodiments, the first hydrophilic vinyl monomer has an amino group, the second hydrophilic vinyl monomer has a hydroxyl group, and the third hydrophilic vinyl monomer has a group 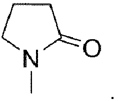 For example, the first hydrophilic vinyl monomer is N,N-dimethylacrylamide (DMA), the second hydrophilic vinyl monomer is 2,3-dihydroxypropyl methacrylate (GMMA), and the third hydrophilic vinyl monomer is N-vinylpyrrolidone (NVP).

In some embodiments, the lens includes a hydrogel lens or a silicone hydrogel lens. In some embodiments, the hydrogel lens is made from a hydrogel material without silicon, and the hydrogel material without silicon includes at least one hydroxyl vinyl monomer, a hydrophilic monomer, a crosslinking monomer, and an initiator. In some embodiments, the silicone hydrogel lens is made from a silicone hydrogel material, and the silicone hydrogel material includes at least one polysiloxane monomer, hydrophilic monomers, crosslinking monomers, and an initiator. Surfaces of lenses made of various materials can be modified by the manufacturing method of the present disclosure, and therefore the manufacturing method is widely applicable.

The present disclosure provides a method of manufacturing a contact lens including the following operations. (a) A lens is made to adsorb an initiator. (b) The initiator adsorbed on the lens is polymerized with at least one hydrophilic vinyl monomer to form a hydrophilic polymer layer entangled with the lens, in which the hydrophilic polymer layer and the lens form an interpenetrating polymer network or a semi-interpenetrating polymer network. The embodiments of the initiator, the hydrophilic vinyl monomer, and the lens can refer to the previously mentioned embodiments of the initiator, the hydrophilic vinyl monomer, and the lens, and will not be repeated here.

In some embodiments, the manufacturing method of the present disclosure can effectively improve the comfort of wearing a contact lens by forming one hydrophilic polymer layer on the lens in a single modification. The manufacturing process is simple, which improves manufacturing efficiency. Moreover, compared with a plasma treatment process of lenses, the cost of the equipment used in the present disclosure is lower, and therefore the manufacturing cost can be reduced. The manufacturing method of the present disclosure can be applied to modify the surfaces of hydrogel lenses or silicone hydrogel lenses, and therefore it is widely applicable.

In some embodiments, making the lens adsorb the initiator includes soaking the lens in an initiator solution including the initiator. In some embodiments, a concentration of the initiator in the initiator solution is 0.1 wt% to 10 wt%. For example, the concentration is 0.1, 0.2, 0.3, 0.4, 0.5, 1, 2, 3, 4, 5, 6, 7, 8, 9, or 10 wt%. When the concentration of the initiator is less than 0.1 wt%, the contact lens may have insufficient hydrophilicity, thereby reducing the comfort of wearing the lens. When the concentration of the initiator is greater than 10 wt%, the contact lens can also have excellent hydrophilic properties. However, the above concentration range is sufficient to provide adequate hydrophilicity to the contact lens. In some embodiments, the soaking time is 0.5 minutes to 60 minutes. For example, the soaking time is 0.5, 1, 5, 10, 20, 30, 40, 50 or 60 minutes.

In some embodiments, polymerizing the initiator adsorbed on the lens with the at least one hydrophilic vinyl monomer includes the following operations. The lens adsorbing the initiator is soaked in a monomer solution including the at least one hydrophilic vinyl monomer. The lens and the monomer solution are heated. It is worth noting that, in the present disclosure, the lens is soaked in the initiator solution and then is soaked in another monomer solution. The initiator solution and the monomer solution are held in different containers. It can be seen that the manufacturing method of the present disclosure includes two steps of soaking the lens. Compared with a method of soaking a lens in a solution containing both an initiator and a hydrophilic vinyl monomer, the manufacturing method of the present disclosure can reuse the initiator solution, save the manufacturing cost, and avoid wasting the initiator.

In some embodiments, the lens and the monomer solution are heated at a temperature of 60 °C to 130 °C. For example, the temperature is 60, 70, 80, 90, 100, 110, 120, or 130 °C. In some embodiments, the lens and the monomer solution are heated for a period of 0.5 minutes to 140 minutes. In some embodiments, the lens and the monomer solution are heated for the period of 30 minutes to 120 minutes. For example, the period is 0.5, 1, 5, 10, 20, 30, 40, 50, 60, 70, 80, 90, 100, 110, 120, 130, or 140 minutes. In the above temperature range and period range, the initiator adsorbed on the lens is polymerized with the hydrophilic vinyl monomers, and therefore the polymerized initiator and hydrophilic vinyl monomers can stably and firmly attached to the lens. Thus, the lens has good modification effect, and therefore has excellent hydrophilic properties.

The following describes the features of the present disclosure more specifically with reference to Experiments 1 to 4. Although the following embodiments are described, the materials, their amounts and ratios, processing details, processing procedures, etc., may be appropriately varied without exceeding the scope of the present disclosure. Accordingly, this disclosure should not be interpreted restrictively by the embodiments described below.

### Experiment 1: Manufacture of contact lenses

Dried silicone hydrogel lenses of Examples 1 to 4 were respectively soaked for 30 minutes in solutions containing an initiator of 2,2'-azobis(2-methylpropionamidine) dihydrochloride (AAPH), and the solutions have different initiator concentrations. The lenses were transferred to a monomer solution containing 8 wt% N,N-dimethylacrylamide (DMA) and 1 wt% 2,3-dihydroxypropyl methacrylate (GMMA) and heated in an oven at 90°C to polymerize the AAPH adsorbed on the silicone hydrogel lenses with DMA and GMMA for 40 minutes to form a hydrophilic polymer layer on each lens. The lenses were soaked in salt water at 70°C for 60 minutes and sterilized by encapsulation in the salt water to obtain contact lenses covered with the hydrophilic polymer layer. The dynamic contact angles (DCA) of the contact lenses were measured. The lenses were placed under the fluid level of the salt water, and advancing angles and receding angles were measured by the captive bubble method. A hysteresis angle (also known as contact angle hysteresis) was calculated by the difference between the advancing angle and receding angle. When the hysteresis angle is smaller, the hydrophilicity of the contact lens is better. N represented the number of contact lenses used to calculate the average contact angle hysteresis. Please refer to Table 1 below for the results of the experiment.

**Table 1**

| | AAPH (wt%) | Polymerization reaction time (minute) | Average contact angle hysteresis (N=5) |
|---|---|---|---|
| Example 1 | 0.1 | 40 | 33.6 |
| Example 2 | 1 | 40 | 13.3 |
| Example 3 | 2 | 40 | 9.5 |
| Example 4 | 10 | 40 | 22.0 |

From Table 1, it can be seen that the addition of 0.1 wt% initiator to the initiator solutions can make the lens surface have good hydrophilic properties. The addition of 1 wt% initiator can further enhance the hydrophilic properties of the lens surface. The addition of 2 wt% initiator can make the lens surface have the best hydrophilic properties.

### Experiment 2: Manufacture of contact lenses

Dried silicone hydrogel lenses of Examples 5 to 10 were soaked for 30 minutes in a 2 wt% initiator solution, and the initiator was 2,2'-azobis(2-methylpropionamidine) dihydrochloride (AAPH). The lenses were transferred to monomer solutions with different compositions and concentrations and heated in an oven at 90°C to polymerize the AAPH adsorbed on the silicone hydrogel lenses with the monomers in the monomer solutions for 60 minutes to form a hydrophilic polymer layer on each lens. The lenses were soaked in salt water at 70°C for 60 minutes and sterilized by encapsulation in the salt water to obtain contact lenses covered with the hydrophilic polymer layer. The hysteresis angles of the contact lenses were calculated. Please refer to Table 2 below for the results of the experiment. Commercially available contact lenses of Comparative Examples 1 and 2 are shown in Table 3 below for comparison with Examples 5 to 10.

**Table 2**

| | AAPH (wt%) | Polymerization reaction time (minute) | Monomer solution | Average contact angle hysteresis (N=5) |
|---|---|---|---|---|
| Example 5 | 2 | 60 | 12wt%DMA+ 1wt%GMMA | 9.4 |
| Example 6 | 2 | 60 | 8wt%DMA+ 1wt%GMMA | 5.4 |
| Example 7 | 2 | 60 | 8wt%DMA+ 0wt%GMMA | 15.8 |
| Example 8 | 2 | 60 | 8wt %DMA+ 1wt%GMMA+ 1wt%NVP | 4.9 |
| Example 9 | 2 | 60 | 3wt%DMA+ 1wt%GMMA | 5.9 |
| Example 10 | 2 | 60 | 2wt%DMA+ 1wt%GMMA | 13.4 |

**Table 3**

| | Contact lens | Average contact angle hysteresis (N=5) |
|---|---|---|
| Comparative Example 1 | DAILIES TOTAL1 | 4.9 |
| Comparative Example 2 | ACUVUE oasys | 6.4 |

As can be seen from Examples 5-9 of Table 2, the concentrations of DMA of the monomer solutions are 1wt%-12wt%, which can make the contact lenses all have excellent hydrophilic properties. As can be seen from Examples 6-7, compared to the reaction with a monomer solution containing a single kind of monomer, the reaction with a monomer solution containing two different monomers can result in contact lenses with better hydrophilic properties. As can be seen from Examples 7-8, compared to the reaction with a monomer solution containing a single kind of monomer, the reaction with a monomer solution containing three different monomers can result in contact lenses with better hydrophilic properties. The average contact angle hystereses of the contact lenses of Examples 6, 8, and 9 are similar to those of the contact lenses of Comparative Examples 1 and 2 in Table 3, and it can demonstrate that the contact lenses of the present disclosure have excellent hydrophilic properties similar to those of the commercially available contact lenses.

### Experiment 3: Manufacture of contact lenses

Dried silicone hydrogel lenses of Examples 11-15 were soaked for 30 minutes in a 2 wt% initiator solution, and the initiator was 2,2'-azobis(2-methylpropionamidine) dihydrochloride (AAPH). The lenses were transferred to a monomer solution containing 8 wt% DMA and 1 wt% GMMA and heated in an oven at 90°C to polymerize the AAPH adsorbed on the silicone hydrogel lenses with the monomers in the monomer solution at various times to form a hydrophilic polymer layer on each lens. The lenses were soaked in salt water at 70°C for 60 minutes and sterilized by encapsulation in the salt water to obtain contact lenses covered with the hydrophilic polymer layer. The hysteresis angles of the contact lenses were calculated. Please refer to Table 4 below for the results of the experiment.

**Table 4**

| | AAPH (wt%) | Polymerization reaction time (minute) | Average contact angle hysteresis (N=5) |
|---|---|---|---|
| Example11 | 2 | 20 | 62.9 |
| Example12 | 2 | 25 | 40.3 |
| Example13 | 2 | 30 | 13.3 |
| Example14 | 2 | 60 | 5.4 |
| Example15 | 2 | 120 | 9.9 |

As can be seen from Table 4, the hydrophilic properties of the contact lenses increase with the increase of the polymerization reaction time, so the average contact angle hysteresis decrease with the increase of the polymerization reaction time. When the polymerization reaction time is 20 minutes, the contact lens has a hydrophilic modification effect. When the polymerization reaction time is 30 minutes, the contact lens has good hydrophilic properties. When the polymerization reaction time is 60 minutes, the contact lens has the best hydrophilic properties.

### Experiment 4: Manufacture of contact lenses

Silicone hydrogel lenses and hydroxyethyl methacrylate (HEMA) hydrogel lenses were soaked in a 2 wt% initiator solution for 30 minutes, and the initiator was 2,2'-azobis(2-methylpropionamidine) dihydrochloride (AAPH). The lenses was transferred to a monomer solution containing 8 wt% DMA and 1 wt% GMMA and heated in an oven at 90°C, so that the AAPH adsorbed on the silicone hydrogel lenses was polymerized with DMA and GMMA for 40 minutes to form a hydrophilic polymer layer on each lens. The lenses were soaked in salt water at 70°C for 60 minutes and sterilized by encapsulation in the salt water to obtain contact lenses covered with the hydrophilic polymer layer. Please refer to Table 5 below for the results of the experiment.

**Table 5**

| | Lens | AAPH (wt%) | Polymerization reaction time (minute) | Average contact angle hysteresis (N=5) |
|---|---|---|---|---|
| Example 16 | silicone hydrogel lens | 2 | 60 | 5.4 |
| Example 17 | HEMA hydrogel lens | 2 | 60 | 7.4 |

As can be seen from Table 5, the manufacturing method of the present disclosure can be applied to lenses of different materials, and can produce contact lenses covered with the hydrophilic polymer layer. The contact lenses have good hydrophilic properties.

In conclusion, the present disclosure provides a contact lens and a method for manufacturing the same. The manufacturing method includes: making a lens adsorb an initiator, and polymerizing the initiator adsorbed on the lens with at least one hydrophilic vinyl monomer to form a hydrophilic polymer layer that is entangled with the lens. Therefore, lens modification can be achieved, and the contact lens can have excellent hydrophilicity. The manufacturing method of the present disclosure has a simple process and therefore can improve the manufacturing efficiency. The equipment cost is low, which can reduce the manufacturing cost. In addition, the manufacturing method of the present disclosure can be applied to modify a surface of a hydrogel lens or a silicone hydrogel lens, so surfaces of lenses made of various materials can be modified by the manufacturing method of the present disclosure. Accordingly, the manufacturing method is widely applicable. The present disclosure can have excellent hydrophilic properties with a hysteresis angle as low as 4.9 degrees.

Although the present disclosure has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

## Claims

1. A contact lens, **characterized by** comprising:
a lens; and
a hydrophilic polymer layer entangled with the lens, the hydrophilic polymer layer and the lens forming an interpenetrating polymer network or a semi-interpenetrating polymer network, wherein the hydrophilic polymer layer is formed by polymerizing an initiator adsorbed on the lens with at least one hydrophilic vinyl monomer.

2. The contact lens of claim 1, **characterized in that** the initiator comprises potassium persulfate, azobisisobutyronitrile, 2,2'-azobis(2-methylpropionamidine) dihydrochloride, 2,2'-azobis(2-methylbutyronitrile), 2,2'-azobis-(2,4-dimethylvaleronitrile), 4,4'-azobis(4-cyanovaleric acid), 2-methylpropane-2-peroxol, 2,2'-azobis[2-(2-imidazolin-2-yl)propane] dihydrochloride, cumene hydroperoxide, di-tert-butyl peroxide, benzoyl peroxide, or combinations thereof.

3. The contact lens of claim 1, **characterized in that** the at least one hydrophilic vinyl monomer comprises acrylic acid, methacrylic acid, acrylamide, methacrylamide, N,N-dimethylacrylamide, N,N-dimethylmethacrylamide, N,N-dimethylmethacrylamide, N-(hydroxyethyl)acrylamide, N-[tris(hydroxymethyl)methyl]acrylamide, 2,3-dihydroxypropyl methacrylate, hydroxyethyl methacrylate, 2-acrylamido-2-methyl-1-propane sulfonic acid, N-vinyl-2-pyrrolidone, methyl methacrylate, ethylene glycol diacrylate, hydroxypropyl acrylate, 2-hydroxypropyl methacrylate, trimethylammonium 2-hydroxy propylmethacrylate hydrochloride, aminopropyl methacrylate hydrochloride, dimethylaminoethyl methacrylate, glycerol methacrylate, N-vinyl-2-pyrrolidone, allyl alcohol, vinylpyridine, N-vinylformamide, N-vinylacetamide, N-vinyl isopropamide, N-vinyl-N-methylacetamide, allyl alcohol, N-vinylcaprolactam, or combinations thereof.

4. The contact lens of claim 1, **characterized in that** the at least one hydrophilic vinyl monomer comprises a first hydrophilic vinyl monomer and a second hydrophilic vinyl monomer that are different, and a weight ratio of the first hydrophilic vinyl monomer to the second hydrophilic vinyl monomer is 20:1 to 1:1.

5. The contact lens of claim 1, **characterized in that** the at least one hydrophilic vinyl monomer comprises a first hydrophilic vinyl monomer, a second hydrophilic vinyl monomer, and a third hydrophilic vinyl monomer that are different.

6. The contact lens of claim 1, **characterized in that** the lens comprises a hydrogel lens or a silicone hydrogel lens.

7. A method of manufacturing a contact lens, **characterized by** comprising:
making a lens adsorb an initiator; and
polymerizing the initiator adsorbed on the lens with at least one hydrophilic vinyl monomer to form a hydrophilic polymer layer entangled with the lens, wherein the hydrophilic polymer layer and the lens form an interpenetrating polymer network or a semi-interpenetrating polymer network.

8. The method of claim 7, **characterized in that** making the lens adsorb the initiator comprises soaking the lens in an initiator solution comprising the initiator.

9. The method of claim 8, **characterized in that** a concentration of the initiator in the initiator solution is 0.1 wt% to 10 wt%.

10. The method of claim 7, **characterized in that** polymerizing the initiator adsorbed on the lens with the at least one hydrophilic vinyl monomer comprises:
soaking the lens adsorbing the initiator in a monomer solution comprising the at least one hydrophilic vinyl monomer; and
heating the lens and the monomer solution.

11. The method of claim 10, **characterized in that** heating the lens and the monomer solution is at a temperature of 60 °C to 130 °C.

12. The method of claim 10, **characterized in that** heating the lens and the monomer solution is for a period of 0.5 minutes to 140 minutes.

13. The method of claim 12, **characterized in that** heating the lens and the monomer solution is for a period of 30 minutes to 120 minutes.

14. The method of claim 7, **characterized in that** the initiator comprises potassium persulfate, azobisisobutyronitrile, 2,2'-azobis(2-methylpropionamidine) dihydrochloride, 2,2'-azobis(2-methylbutyronitrile), 2,2'-azobis-(2,4-dimethylvaleronitrile), 4,4'-azobis(4-cyanovaleric acid), 2-methylpropane-2-peroxol, 2,2'-azobis[2-(2-imidazolin-2-yl)propane] dihydrochloride, cumene hydroperoxide, di-tert-butyl peroxide, benzoyl peroxide, or combinations thereof.

15. The method of claim 7, **characterized in that** the at least one hydrophilic vinyl monomer comprises acrylic acid, methacrylic acid, acrylamide, methacrylamide, N,N-dimethylacrylamide, N,N-dimethylmethacrylamide, N,N-dimethylmethacrylamide, N-(hydroxyethyl)acrylamide, N-[tris(hydroxymethyl)methyl]acrylamide, 2,3-dihydroxypropyl methacrylate, hydroxyethyl methacrylate, 2-acrylamido-2-methyl-1-propane sulfonic acid, N-vinyl-2-pyrrolidone, methyl methacrylate, ethylene glycol diacrylate, hydroxypropyl acrylate, 2-hydroxypropyl methacrylate, trimethylammonium 2-hydroxy propylmethacrylate hydrochloride, aminopropyl methacrylate hydrochloride, dimethylaminoethyl methacrylate, glycerol methacrylate, N-vinyl-2-pyrrolidone, allyl alcohol, vinylpyridine, N-vinylformamide, N-vinylacetamide, N-vinyl isopropamide, N-vinyl-N-methylacetamide, allyl alcohol, N-vinylcaprolactam, or combinations thereof.
